# EUROPEAN PATENT SPECIFICATION

(11) **EP 2 274 967 B1**
(45) Date of publication and mention of the grant of the patent: **04.07.2012**
(21) Application number: 10169731.6
(22) Date of filing: 15.07.2010
(51) Int. Cl.: A01B 59/00, B60D 1/02, B60D 1/14, B60D 1/145

(54) **Improved universal joint**
Verbessertes universelle Gleichlaufgelenk
Joint universel homocinétique amélioré

(30) Priority: 16.07.2009 BE 200900433
(43) Date of publication of application: 19.01.2011
(73) Proprietor: CNH Österreich GmbH, 4300 St. Valentin (AT)
(72) Inventor: Leibetseder, Oliver, 4020 Linz (AT); Reichel, Christian, 3232, Bischofstetten (AT); Huber, Roland, 4391, Waldhausen (AT); Arbeithuber, Peter, 4484, Kronstorf (AT)
(74) Representative: CNH IP Department

(56) References cited:
- EP-A1- 0 065 081
- DE-A1- 3 643 209
- DE-C1- 3 839 522
- DE-C1- 4 129 908

## Description

The present invention relates to an universal joint for connecting a first member and a second member for a pivotal movement about first and second mutually orthogonal axes.

Such universal joints are used for example as parts of links for coupling different implements to agricultural or industrial vehicles. Such universal joints often include some type of ball joints with limited degree of freedom for pivoting about one of the mutually orthogonal axes. A universal joint of this kind is known from document DE 36 43 209 A.

With front hitch devices for agricultural or industrial vehicles wherein the front hitch device is mounted to the front axle, the oscillation of the front axle also is transmitted to the implement attached thereto. For handling of the implement, it is advantageous to position this implement with the smallest possible distance to the front axle of the vehicle.

In view of the continuously stricter environmental requirements it is necessary to better control the motor cooling system (water cooler, charge cooling). Further, additional coolers for the drive train (transmission oil cooler) and the hydraulic components (hydraulic fluid cooler) may be required. With improved working conditions, an air conditioning system is required which needs a condensor. All these coolers should be preferably disposed at the front end of the vehicle.

In addition to these coolers, today larger head lamps are desired and used adding to the space requirement of the devices disposed at the front of the vehicle.

All these factors in total have a negative effect to the upper coupling point of the upper or top link of a front hitch device. This upper coupling point is continuously moved in forward direction to accommodate all the devices mentioned. Since the implement in spite of this shall be disposed as near as possible to the vehicle, the length of the upper link is continuously reduced.

Since the angle of oscillation of the front axle is always the same, this results in an increase of the angle of movement of the upper link relative to the central plane of the vehicle. Therefore, the usability of a conventional upper link with a ball joint eye and bearing ball joint is reduced. In most cases, a cardanic universal joint is required.

The same applies to any coupling means between vehicle and an implement as far as such coupling means include a joint subject to a movement exceeding that which may be accommodated by a ball joint.

If no front implement is used, the position of the upper link is not defined. To avoid undue movements of the upper link, this link may be taken down and brought into a park position. A further possibility is the use of a park position with installed top link. For the user of the vehicle, it would be advantageous to be able to move the upper link into a park position without any dismantling. In this case, the upper link has not to be installed again on subsequently using the front implement.

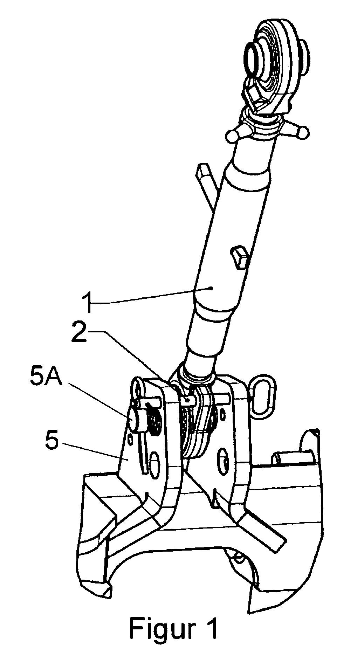

For the mounting of the upper link by means of a ball joint eye and bearing ball, there is already a rather simple solution for a park position shown in Figure 1.

A first member of the upper link 1 is blocked by means of a pin 2 extending through the plates 5 of the bifurcated end of the second member of the support arrangement and a lug mounted to the ball joint eye or integrally formed therewith.

With a cardanic universal joint, there is an additional degree of freedom, which has to be taken into account in blocking this joint. All known solutions are quite complicated and expensive and further need space which anyhow is only available in a limited manner.

An example for a cardanic universal joint having a limited degree of freedom into mutually perpendicular directions is disclosed in EP 1 982 855 A1, wherein spring rods as well as springs are used for biasing the upper link into a rest or park position. Additionally, between the ends of the fork of the intermediate piece of the universal joint, rods may be disposed for limiting the relative movement between this intermediate part and the upper link about one pivot axis. This arrangement is rather complicated and space consuming, as well as prone to collecting dirt and debris.

The object of the present invention is to provide a universal joint which may be blocked in a park position without the requirement of a complicated design and devices which are space consuming and prone to collecting dirt and debris.

According to the present invention, an universal joint is provided comprising an elongated coupling member having a longitudinal axis and respective first and second pivot pins adjacent its first and second longitudinal ends for coupling a first member and a second member for a pivotal movement about first and second mutually orthogonal axes extending through the first and second pivot pins, respectively, the first and second mutually orthogonal axes extending perpendicularly to the longitudinal axis of the coupling member, the first member having at its end adjacent the universal joint a lug received within a bifurcated first end of the coupling member for a pivotal movement around the first axis extending through the bifurcated end and the lug, the coupling member having, at its second end opposite to the first end, a lug received within a bifurcated end of the second member for pivotal movement around the second axis extending through the bifurcated end of the second member and the lug of the coupling member;
characterized by a locking arrangement for locking the first and second members in a predetermined position against a movement about the respective pivot axes, the locking arrangement comprising:
a first elongated recess at the free distal end of the lug of the first member, the recess extending substantially parallel to the second pivot axis at a position intermediate the first and second pivot axes;
second recesses at the free ends of laterally disposed plates forming the bifurcated end of the second member, the second recesses being aligned with the first recess in the predetermined position; and
a locking pin insertable through the first and second recesses in the predetermined aligned position thereof for locking the first and second members against any relative motion.

The recesses may be formed by holes extending through the links of the forked second or support member and the end of the first member of the upper link, or these recesses may simply be indented into the end surfaces of the plates of the forked support block and the end of the lug of the first member.

According to a preferred embodiment, the clearance between the pin and the recesses is as small as possible to avoid undue vibrations of the universal joint if blocked in the parking position.

The present invention will be explained in detail on the base of the enclosed drawings wherein:
- Figure 1: shows a known embodiment of a locking arrangement for a ball eye and bearing ball arrangement.
- Figure 2: shows a perspective view of a first embodiment of the present invention.
- Figure 3: is a side view of the locking arrangement of the universal joint of Figure 2.
- Figure 4: shows a detail of the locking arrangement in greater scale.

In spite of the fact that the present invention in the following will be explained in detail referring to the upper link of a front hitch device for mounting implements to an agricultural or industrial vehicle, the principles of locking such universal joint are applicable for any universal joint of the type defined in the preamble of claim 1.

Figure 1 shows a version of a known locking arrangement for a ball joint arrangement which has been used for mounting the upper link of a front hitch device to an implement. The arrangement shown in Figure 1 comprises the upper link 1 of such a device which is mounted to a support structure 5 of a vehicle via a ball joint eye fixed to the end of the upper link 1, the ball joint eye receiving a ball joint journaled on a pin 5A mounted on the bifurcated end of the second member 5 of the universal joint constituted by the support mounted on the vehicle.

For enabling the locking of the upper link 1 in the non-used stage, the ball joint eye is provided with a lug having a bore extending there through and aligned with corresponding bores in the two plates of the second member 5 in an aligned stage corresponding to the desired locking position. A locking pin 2 may be inserted into the aligned bores in the second member 5 and the lug of the ball joint eye to lock the upper link 1 in the predetermined position since on inserting the locking pin 2, the upper link 1 may neither pivot around the axis 5A nor swivel about the ball joint about axes perpendicular to the axis of the pin 5A.

As indicated above, such ball joint arrangements only have a limited degree of freedom so that, if used for instance for mounting the upper link 1 to a support structure on a vehicle having an axle mounted front hitch, such an arrangement may not be used if the upper link is rather short and the deflection thereof is rather large.

In such cases, therefore, cardanic universal joints have to be used which provide a larger possible angle of deflection between the two members to be coupled thereby.

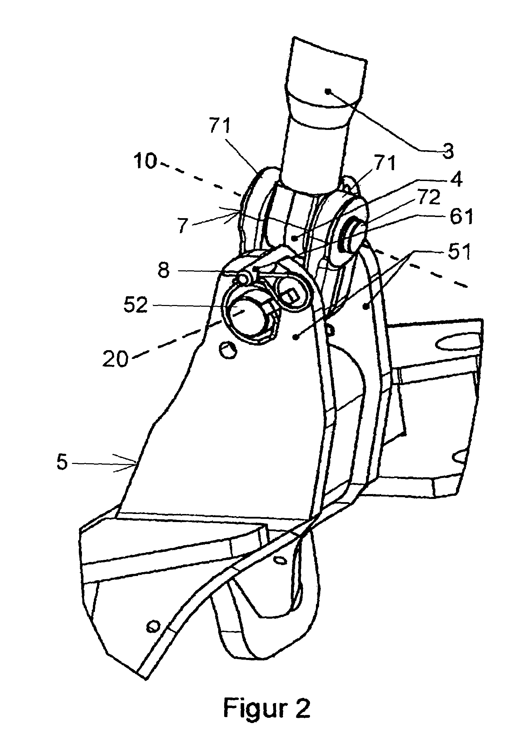

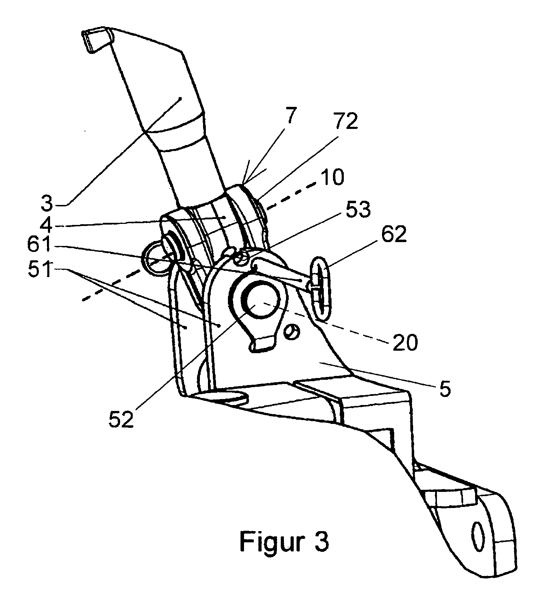

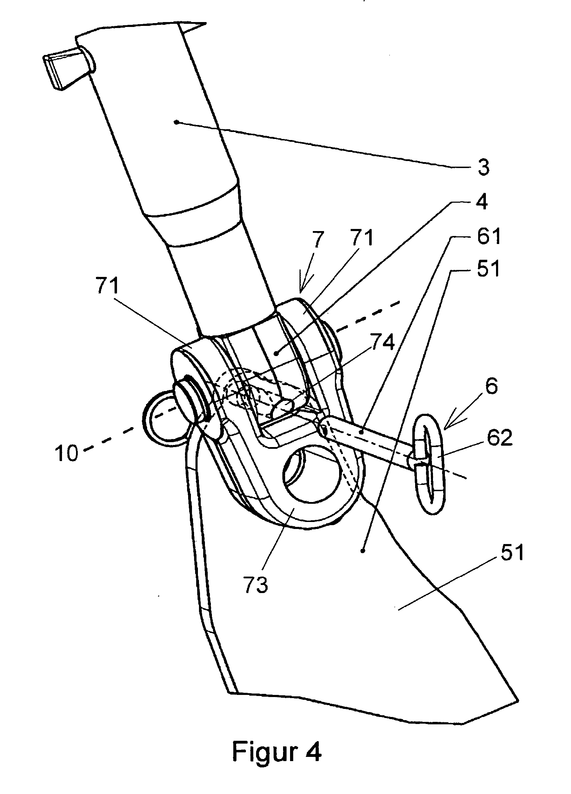

Figures 2 to 4 show an upper link similar to Figure 1, but wherein a cardanic universal joint is used for connecting the upper link constituting a first member 3 to the second member 5, again formed by the support structure for an upper link 3 of a front hitch of a vehicle (not shown).

With the embodiment of the universal joint shown in Figures 2 through 4, the first member 3 is connected to the second member or support structure 5 via a coupling member 7. For this purpose, the first member 3 is provided with a lug 4 at its end adjacent the coupling member 7, and this lug 4 is received within a bifurcated first end 71 of the coupling member 7 for pivotal movement about a first axis 10 extending through a pivot pin 72.

The coupling member 7 has a second end opposite to the first bifurcated end, the second end being provided with a lug 73 received within the bifurcated end 51 of the second member or support structure for pivotal movement about a second axis 20 extending through a pivot pin 52.

The embodiment shown in Figures 2 through 4 further comprises a locking arrangement comprising a locking pin 61 which extends through aligned recesses in the free ends of plates forming the bifurcated end 51 of the second member 5 and of the free end of the lug 4 of the first member 3.

These recesses may be either formed by grooves 53 formed in the edge of the free ends of the plates 51, as well as an elongated groove 74 formed in the free end of the lug 4 of the first member 3, or corresponding bores may extend through these plates 51 and the end of the lug 4 at a position intermediate the first and second pivot axes 10, 20. These recesses or bores are disposed in a manner such that they are aligned in the predetermined desired park position of the first and second members 3, 5, so that, on inserting the locking pin 61, the two members 3, 5 are blocked in this desired park position.

The locking pin arrangement 6 which comprises the locking pin 61 may be secured in its position by a ring 62 fixed at one end of the locking pin 61 and at least one linchpin 8 insertable at the opposite end of the locking pin 61, so that it may readily be removed on mounting the implement (not shown). It is clear that according to an alternative embodiment the ring 62 could be replaced by a linchpin.

In spite of the fact that with the embodiment shown in Figures 2 through 4, the support structure forming the second member 5 of the universal joint is shown as bifurcated, it of course would be possible to have a reversed structure, wherein the support structure 5 secured to the vehicle is formed by a lug received by a bifurcated end of a coupling member which itself is provided at its opposite end with a lug received by a bifurcated end of the first member 3.

In the last mentioned version (not shown), the locking pin 61 would extend through aligned recesses at the end of the lug of the second member 5 and the bifurcated end of the first member 3.

## Claims

1. Universal joint comprising an elongated coupling member (7) having a longitudinal axis and respective first and second pivot pins (72, 52) adjacent its first and second longitudinal ends for coupling a first member (3) and a second member (5) for a pivotal movement about first and second mutually orthogonal axes (10, 20) extending through the first and second pivot pins (72, 52), respectively, the first and second mutually orthogonal axes (10, 20) extending perpendicularly to the longitudinal axis of the coupling member (7), the first member (3) having at its end adjacent the universal joint a lug (4) received within a bifurcated first end (71) of the coupling member (7) for a pivotal movement around the first axis (10) extending through the bifurcated end (71) and the lug (4), the coupling member (7) having, at its second end opposite to the first end, a lug (73) received within a bifurcated end (51) of the second member (5) for pivotal movement around the second axis (20) extending through the bifurcated end of the second member (5) and the lug (73) of the coupling member;
**characterized by** a locking arrangement for locking the first and second members (3, 5) in a predetermined position against a movement about the respective pivot axes (10, 20), the locking arrangement comprising:
a first elongated recess (74) at the free distal end of the lug (4) of the first member (3), the recess (74) extending substantially parallel to the second pivot axis (20) at a position intermediate the first and second pivot axes (10, 20);
second recesses (53) at the free ends of laterally disposed plates (51) forming the bifurcated end of the second member (5), the second recesses (53) being aligned with the first recess (74) in the predetermined position; and
a locking pin (61) insertable through the first and second recesses (74, 53) in the predetermined aligned position thereof for locking the first and second members (3, 5) against any relative motion.

2. Universal joint according to claim 1, **characterized in that** the first recess (74) is formed by a groove in the free end of the lug (4) of the first member (3), the groove having a longitudinal extension substantially perpendicular to the first axis.

3. Universal joint according to claim 1, **characterized in that** the first recess is formed by a bore extending through the free distal end of the lug (4) of the first member (3) substantially perpendicular to the first axis (10).

4. Universal joint according to any of the claim 1 to 3, **characterized in that** the second recesses (53) at the free ends of laterally disposed plates (51) forming the bifurcated end of the second member (5) are formed by bores extending through the plates (51) at a position intermediate the first and second pivot axes (10, 20)

5. Universal joint according to any of the preceding claims, **characterized in that** the locking pin (61) inserted through the first and second recesses (74, 53) in the predetermined aligned position thereof is secured in place by at least one linchpin (8).

6. Universal joint according to any of the preceding claims, **characterized in that** the first member (3) is the upper link of a front hitch of a vehicle and that the second member (5) is mounted to a hitch support structure of the vehicle.

## Patentansprüche

1. Universalgelenk, das ein langgestrecktes Kupplungsteil (7) mit einer Längsachse und jeweiligen ersten und zweiten Schwenkbolzen (72, 52) benachbart zu seinen ersten und zweiten Längsenden zum Kuppeln eines ersten Bauteils (3) und eines zweiten Bauteils (5) für eine Schwenkbewegung um erste und zweite zueinander orthogonale Achsen (10, 20) aufweist, die sich durch die ersten bzw. zweiten Schwenkzapfen (72, 52) erstrecken, wobei die ersten und zweiten zueinander orthogonalen Achsen (10, 20) sich unter einem rechten Winkel zu der Längsachse des Kupplungsteils (7) erstrecken, wobei das erste Bauteil (3) an seinem Ende benachbart zu dem Universalgelenk eine Lasche (4) aufweist, die in einem gegabelten ersten Ende (71) des Kupplungsbauteils (7) für eine Schwenkbewegung um die erste Achse (10) aufgenommen wird, die sich durch das gegabelte Ende (71) und die Lasche (4) erstreckt, wobei das Kupplungsbauteil (7) an seinem zweiten Ende entgegengesetzt zu dem ersten Ende eine Lasche (73) aufweist, die in einem gegabelten Ende (51) des zweiten Bauteils (5) für eine Schwenkbewegung um die zweite Achse (20) aufgenommen wird, die sich durch das gegabelte Ende des zweiten Bauteils (5) und die Lasche (73) des Kupplungsbauteils erstreckt;
**gekennzeichnet durch** eine Verriegelungsanordnung zum Verriegeln der ersten und zweiten Bauteile (3, 5) in einer vorgegebenen Position gegen eine Bewegung um die jeweiligen Schwenkachsen (10, 20), wobei die Verriegelungsanordnung Folgendes umfasst:
eine erste langgestreckte Ausnehmung (74) an dem freien distalen Ende der Lasche (4) des ersten Bauteils (3), wobei sich die Ausnehmung (74) im Wesentlichen parallel zu der zweiten Schwenkachse (20) an einer Position zwischen den ersten und zweiten Schwenkachsen (10, 20) erstreckt;
zweite Ausnehmungen (53) an den freien Enden von seitlich angeordneten Platten (51), die das gegabelte Ende des zweiten Bauteils (5) bilden, wobei die zweiten Ausnehmungen (53) mit der ersten Ausnehmung (74) in der vorgegebenen Position ausgerichtet sind;
einen Verriegelungsbolzen (61), der **durch** die ersten und zweiten Ausnehmungen (74, 53) in der vorgegebenen ausgerichteten Position hiervon einsetzbar ist, um die ersten und zweiten Bauteile (3, 5) gegen jede Relativbewegung zu blockieren.

2. Universalgelenk nach Anspruch 1, **dadurch gekennzeichnet, dass** die erste Ausnehmung (74) durch eine Nut in dem freien Ende der Lasche (4) des ersten Bauteils (3) gebildet ist, wobei die Nut eine Längsstreckung im Wesentlichen unter einem rechten Winkel zu der ersten Achse aufweist.

3. Universalgelenk nach Anspruch 1, **dadurch gekennzeichnet, dass** die erste Ausnehmung durch eine Bohrung gebildet ist, die sich durch das freie distale Ende der Lasche (4) des ersten Bauteils (3) im Wesentlichen unter einem rechten Winkel zu der ersten Achse (10) erstreckt.

4. Universalgelenk nach einem der Ansprüche 1 bis 3, **dadurch gekennzeichnet, dass** die zweiten Ausnehmungen (53) an den freien Enden der seitlich angeordneten Platten (51), die das gegabelte Ende des zweiten Bauteils (5) bilden, durch Bohrungen gebildet sind, die sich durch die Platten (51) an einer Position zwischen den ersten und zweiten Schwenkachsen (10, 20) erstrecken.

5. Universalgelenk nach einem der vorhergehenden Ansprüche, **dadurch gekennzeichnet, dass** der Verriegelungsbolzen (61), der durch die ersten und zweiten Ausnehmungen (74, 53) in der vorgegebenen ausgerichteten Position hiervon eingesetzt wird, an seinem Platz durch einen Verriegelungsstift (8) gesichert ist.

6. Universalgelenk nach einem der vorhergehenden Ansprüche, **dadurch gekennzeichnet, dass** das erste Bauteil (3) der Oberlenker eines Fronthubwerkes eines Fahrzeuges ist, und dass das zweite Bauteil (5) auf einer Hubwerk-Tragstruktur des Fahrzeuges befestigt ist.

## Revendications

1. Joint universel comprenant un organe d'accouplement allongé (7) ayant un axe longitudinal et des premier et second axes d'articulation respectifs (72, 52) adjacents à ses première et seconde extrémités longitudinales pour accoupler un premier membre (3) et un second membre (5), pour permettre un mouvement pivotant autour des premier et second axes mutuellement orthogonaux (10, 20) s'étendant respectivement au travers des premier et second axes d'articulation (72, 52), les premier et second axes mutuellement orthogonaux (10, 20) s'étendant perpendiculairement à l'axe longitudinal de l'organe d'accouplement (7), le premier membre (3) comportant à son extrémité adjacente au joint universel une bride (4) reçue à l'intérieur d'une première extrémité divisée (71) de l'organe d'accouplement (7) pour permettre un mouvement pivotant autour du premier axe (10) s'étendant au travers de l'extrémité divisée (71) et de la bride (4), et l'organe d'accouplement (7) comportant, à sa seconde extrémité opposée à la première extrémité, une bride (73) reçue à l'intérieur d'une extrémité divisée (51) du second membre (5) pour permettre un mouvement pivotant autour du second axe (20) s'étendant à travers l'extrémité divisée du second membre (5) et la bride (73) de l'organe d'accouplement,
**caractérisé par** un agencement de verrouillage destiné à verrouiller les premier et second membres (3, 5) dans une position prédéterminée pour empêcher un mouvement autour des axes de pivotement respectifs (10, 20), l'agencement de verrouillage comprenant :
une première cavité allongée (74) à l'extrémité libre distale de la bride (4) du premier membre (3), la cavité (74) s'étendant sensiblement parallèlement au second axe de pivotement (20) à une position moyenne des premier et second axes de pivotement (10, 20),
des secondes cavités (53) aux extrémités libres de plaques disposées latéralement (51) formant l'extrémité divisée du second membre (5), les secondes cavités (53) étant alignées avec la première cavité (74) dans la position prédéterminée, et
une broche de verrouillage (61) insérable au travers des première et secondes cavités (74, 53) dans la position alignée prédéterminée de celles-ci pour verrouiller les premier et second membres (3, 5) contre tout mouvement relatif.

2. Joint universel selon la revendication 1, **caractérisé en ce que** la première cavité (74) est formée par une rainure dans l'extrémité libre de la bride (4) du premier membre (3), la rainure ayant une extension longitudinale sensiblement perpendiculaire au premier axe.

3. Joint universel selon la revendication 1, **caractérisé en ce que** la première cavité (74) est formée par un trou s'étendant au travers de l'extrémité libre distale de la bride (4) du premier membre (3) de façon sensiblement perpendiculaire au premier axe (10).

4. Joint universel selon l'une quelconque des revendications 1 à 3, **caractérisé en ce que** les secondes cavités (53) aux extrémités libres de plaques disposées latéralement (51) formant l'extrémité divisée du second membre (5) sont formés par des trous s'étendant au travers des plaques (51) à une position moyenne des premier et second axes de pivotement (10, 20).

5. Joint universel selon l'une quelconque des revendications précédentes, **caractérisé en ce que** la broche de verrouillage (61) insérée au travers des première et secondes cavités (74, 53) dans la position alignée prédéterminée de celles-ci est maintenue en place par au moins une goupille (8).

6. Joint universel selon l'une quelconque des revendications précédentes, **caractérisé en ce que** le premier membre (3) est le bras supérieur d'un attelage avant d'un véhicule et **en ce que** le second membre (5) est monté sur une structure de support d'attelage du véhicule.
